# EUROPÄISCHE PATENTANMELDUNG

(11) **EP 4 800 258 A1**
(43) Veröffentlichungstag der Anmeldung: **02.09.2026**
(21) Anmeldenummer: 26158387.6
(22) Anmeldetag: 13.02.2026
(51) Int. Cl.: F16C 33/14, C21D 9/40, F16C 17/10, F16C 23/04

(54) **GLEITLAGER**

(30) Priorität: 28.02.2025 DE 102025107629
(71) Anmelder: Aktiebolaget SKF, 415 50 Göteborg (SE)
(72) Erfinder: Wendel, Michael, 28219 Bremen (DE)
(74) Vertreter: Kuhstrebe, Jochen

(57) **Zusammenfassung**

Offenbart wird ein Gleitlager (1), insbesondere Großgleitlager für eine Wind- oder Wasserkraftanlage, dadurch gekennzeichnet, dass das Gleitlager (1) mindestens eine Fläche aufweist, die einen ersten Oberflächenbereich (20) aufweist, der bis zu einer ersten Härtetiefe (T1) lasergehärtet ist.

## Beschreibung

### Technisches Gebiet

Vorliegende Erfindung betrifft ein Gleitlager, insbesondere ein Großgleitlager mit beispielsweise einem Durchmesser von mehr als 380mm, gemäß dem Oberbegriff von Patentanspruch 1. Dabei ist das Großgleitlager insbesondere für einen Einsatz in der Wind- oder Wasserkraft geeignet.

### Technischer Hintergrund

Gleitlager können in verschiedenen technischen Bereichen eingesetzt werden, wobei je nach Anwendungsbereich unterschiedliche Anforderungen an diese Gleitlager bestehen.

Insbesondere bei einem Gleitlager, das hohen Belastungen, beispielsweise im Bereich der Windkraft oder Wasserkraft, ausgesetzt ist, muss die Laufbahn/Gleitfläche hart und verschleißfest sein. Anderen Flächen können dagegen unbehandelt bleiben (im Lieferzustand). Die Gleitflächen des Gleitlagers können gegeneinander oder gegen verschiedene Buchsen, Anlaufscheiben, Leisten, Gleitschuhe gleiten oder durch einen Schmierfilm, wie beispielsweise einem Ölfilm, getrennt sein.

Um entsprechen harte und verschleißfreie Flächen bereitzustellen kann die Gleitfläche gehärtet sein. Dabei ist bekannt, die Gleitfläche einer Wärmebehandlung zu unterziehen.

Wärmebehandlungen nach dem Stand der Technik, wie martensitisches Härten, bainitisches Härten, Einsatzhärten, Nitrieren oder Induktionshärten haben jedoch folgende Nachteile:
- Chargenprozesse (außer Induktionshärten) ohne Einzelstückfluss
- Großgeräte/Öfen, die für große Ringe benötigt werden (die schlecht verfügbar sind)
- Großer Verzug führt zu großem Aufmaß für das weiche Bauteil und kostspieliger Nachbearbeitung
- Großer Aufwand für Teilehandling und Logistik
- Oberflächenbeschädigungen erfordern eine Hartbearbeitung, um beschädigte Oberflächen zu entfernen (z. B. Entkohlung, Oxidation usw.)
- Spezielle, teilbezogene Werkzeugkosten und damit verbundene Kosten (z. B. Induktoren für das Induktionshärten)
- Lange Umrüstzeiten beim Wechsel von Produktionsteilen
- keine selektive Härtung möglich (Ausnahme: Induktionshärtung)
- Bedarf an Stellfläche für Wärmebehandlungsanlagen
- Hoher Energiebedarf (Ausnahme: Induktionshärtung)

Darüber hinaus lassen sich für einige der oben genannten Wärmebehandlungsverfahren keine geeigneten Ofengrößen finden, insbesondere nicht für große Ringe.

Es ist deshalb Aufgabe vorliegender Erfindung, ein Gleitlager bereitzustellen, dessen Gleitflächen energie- und kostengünstig gefertigt und gehärtet werden können und bei dem auf eine aufwendige Nachbearbeitung verzichtet werden kann.

### Zusammenfassung der Erfindung

Diese Aufgabe wird durch ein Gleitlager gemäß Patentanspruch 1 gelöst.

Im Folgenden wird ein Gleitlager vorgestellt, das mindestens eine Fläche aufweist, die einen ersten Oberflächenbereich aufweist, der bis in eine erste Härtetiefe lasergehärtet ist.

Als Härtetiefe ist dabei der Bereich zu verstehen, in dem aufgrund des Wärmeeintrags durch den Laser eine Phasenumwandlung des Ausgangswerkstoff von einem ferritischen Grundgefüge in ein martensitisches Gefüge erfolgt. Mit anderen Worten entsteht beim Laserhärten des ersten Oberflächenbereichs in diesem Bereich eine sich über die erste Härtetiefe erstreckende umgewandelte Randschicht, an die sich das nicht umgewandelte Grundgefüge anschließt.

Dabei ist insbesondere vorteilhaft, wenn die erste Härtetiefe weniger als 2mm, insbesondere ungefähr 1 mm tief ist.

Durch den Einsatz des Laserhärtens werden die oben genannten Nachteile überwunden. Außerdem liegen bei großen Gleitlagern, mit einem Durchmesser von mehr als 100 cm die Vorteile in Bezug auf Energieeffizienz und Handhabung auf der Hand, wie im Folgenden näher erläutert wird.

Beim Laserhärten werden die Stahlbauteile lokal so wärmebehandelt, dass durch schnelle Lasererwärmung und anschließende Abkühlung durch Wärmeleitung ein hauptsächlich martensitisches Gefüge erzeugt wird. Falls aus geometrischen Gründen und/oder wegen der begrenzten Härtbarkeit des verwendeten Stahls erforderlich, können zusätzliche Abschreckmedien (z.B. Druckluft oder Wasser) eingesetzt werden, um die Abschreckgeschwindigkeit zu erhöhen.

Das Laserhärten zeichnet sich durch einen begrenzten Energie-/Wärmeeintrag und damit geringen Energieverbrauch und damit verbundene geringe CO2 Emissionen, geringen Verzug und begrenzte oder keine Oberflächenoxidation aus. Dies birgt die Möglichkeit, nachfolgende Hartbearbeitungsschritte zur Entfernung von Oberflächenschäden, wie beispielsweise Oxidschichten/entkohlte Oberflächen/Zunder, die bei herkömmlichen Härteverfahren entstehen würden, zu überspringen und den Härteprozess in die Weichbearbeitung zu integrieren. Dadurch kann die Durchlaufzeit sowie der Handhabungs- und Logistikaufwand in der Fertigungskette, insbesondere bei Gleitlagern mit großem Durchmesser gesenkt werden.

Des Weiteren zeichnet das Laserhärten eine hohe Energiedichte und eine kurze Prozesszeit aus. Ebenfalls ist vorteilhaft, dass nur ein kleines Volumen betroffen ist, bzw. nur ein kleiner Teil des Werkstückquerschnitts behandelt wird und, dass keine Prozessgase erforderlich sind. Wie oben bereits erwähnt kann zudem beim Laserhärten auf ein Abschrecken des Werkstücks nach dem Erwärmen verzichtet werden, da die Abschreckung durch Wärmeleitung im Bauteil erfolgt. Dies hat die Vorteile, dass kein Abschreckmedium und damit auch keine Pumpen für die Abschreckung oder Kühlung der Anlage erforderlich sind. Ein weiterer Vorteil der raschen Abkühlung des kleinen erwärmten Materialvolumens ist die Möglichkeit kosteneffiziente und CO2-Fußabdruck arme Stähle verwenden zu können, durch einen vergleichsweise nur geringen Gehalt an benötigten Legierungselementen bzw. eine nur geringe benötigte Einhärtbarkeit. Des Weiteren kann die gleiche Laserquelle und Optik für unterschiedliche Werkstückgeometrien verwendet werden, so dass auf eine teilespezifische Werkzeugbestückung verzichtet werden kann bzw. deutlich reduziert werden kann.

Ein weiterer Vorteil des Laserhärtens besteht darin, dass beim Laserhärten nur ein sehr geringer bis gar kein Verzug an dem Lagerbauteil auftritt, so dass auf eine kostenintensive Nachbearbeitung, insbesondere eine aufwendige Hartbearbeitung, zum Teil oder völlig verzichtet werden kann. Dies hat zudem den Vorteil, dass weniger Materialzugabe erforderlich ist, da eine geringere Verformung auftritt, was eine bessere Materialausnutzung bedeutet und ebenfalls Kosten spart.

Darüber hinaus kann der Laserhärteprozess in den Weichbearbeitungsablauf (z.B. Drehen, Fräsen, usw.) also in die Bearbeitung vor dem eigentlichen Härten und/oder den Hartbearbeitungsprozess (z.B. Schleifen, Honen) also die Bearbeitung nach dem Härten integriert werden, wobei sogar eine Integration in bestehende Maschinen möglich ist.

Darüber hinaus kann zudem eine Integration eines flexiblen Laserhärtegeräts in die Weichbearbeitung - aber auch in die Hartbearbeitungseinheit - erfolgen, was die Zykluszeit verringern und die Produktivität in hohem Maße steigern kann. Dies ist besonders im Bereich der Großlager wichtig, wo der Handhabungs- und Logistikaufwand vergleichsweise groß und kostspielig ist.

Da gerade bei Gleitlagern die Gleitfläche, also die funktionelle Fläche, besonders belastet ist, ist insbesondere ein Ausführungsbeispiel vorteilhaft, bei dem zumindest eine der mindestens einen Fläche eine Gleitfläche ist, die in Gleitkontakt mit einem Gleitpartner des Gleitlagers ist.

Im Gegensatz zu Wälzlagern, bei denen das relativ kostengünstiges Härteverfahren für die Laufbahn bzw. die funktionelle Fläche nur bedingt eingesetzt werden kann, da die Einhärtetiefe, die mit dem Laserhärten erreicht werden kann, meist nicht ausreicht, um die Hertzsche Pressung zu überdecken, ist die mit dem Laserhärten erreichbare Einhärtetiefe für die Gleitflächen jedoch völlig ausreichend.

Vorzugsweise erstreckt sich der lasergehärtete Bereich über die gesamte Kontaktfläche der Gleitpaarung. Die Härtetiefe kann aber in einem Außenbereich des zu härtenden Bereichs allmählich abnehmen, solange die erforderliche Oberflächenhärte über den Gleitkontakt erreicht wird.

Vorzugsweise ist die Oberflächenhärte eines Innen- bzw. Außenrings im Gleitkontakt mindestens gleich oder höher sein als die des Gleitpartners.

Neben dem Laserhärten der Gleitflächen kann es aber auch bei nichtfunktionellen Flächen, also Flächen die nicht für die Gleitpaarung genutzt werden, vorteilhaft sein, diese zu härten, um sie beispielsweise besonders gegen Verschleiß zu schützen. Somit ist auch ein Ausführungsbeispiel vorteilhaft, bei dem mindestens eine der mindestens einen Fläche eine nichtfunktionelle Fläche ist, wobei die nichtfunktionelle Fläche im zusammengebauten Zustand einem Kontakt mit einem an dem Gleitlager anliegenden Element ausgesetzt ist oder in Kontakt mit einem das Gleitlager aufnehmenden Element ist.

Die nichtfunktionelle Fläche kann dabei insbesondere eine Innendurchmesserfläche eines Innenrings, eine Außendurchmesserfläche eines Außenrings, eine Seitenfläche eines Lagerrings, und/oder ein Flansch eines Lagerrings, sein.

Durch das Laserhärten der funktionellen (Gleitfläche) oder nichtfunktionellen Fläche kann erreicht werden, dass Verschleißspuren z.B. bei der Montage vermieden werden. Ebenfalls können durch die lasergehärtete Oberflächen Beschädigungen aufgrund von Verschleißpartikeln oder Lagerbauteilschäden beim Auftreten von Kriechbewegungen zwischen Lagerbauteil und umgebenden Bauteil vermieden werden. Ferner kann insgesamt der Verschleiß bei Bewegungen oder bei Gleitkontakten zwischen den Lagerbauteilen und/oder zwischen Lagerbauteil und Lagerbauteil aufnehmendem Element aufgrund des lasergehärtetes Oberflächenbereichs verringert werden, was die Lebensdauer der Lagerbauteile und des Lagers insgesamt erhöht.

Darüber hinaus findet beim Laserhärten ein mikrostruktureller Phasenwechsel statt, der zu einer Änderung des spezifischen Volumens bzw. zu einer Änderung der Dichte der physikalischen Phasen führt, z.B. bei der Umwandlung in Martensit und/oder Bainit. Somit besitzen die gehärteten und umgewandelten Oberflächenbereiche ein größeres Volumen als in der Ausgangsphase und führen zu einer Erhebung der lasergehärteten Oberflächen im Mikrometerbereich. Dadurch wiederum kann erreicht werden, dass insbesondere an Kontaktflächen zu umgebenden Bauteilen, wie beispielsweise einer Welle oder einem Gehäuse der Presssitz und/oder die Reibung vergrößert wird, so dass die Bauteile weniger Kriechbewegungen ausgesetzt sind.

Des Weiteren können "Krater" in der Oberflächentopographie erzeugt werden, in dem das Material lokal angeschmolzen wird und die Schmelze verdampft (Lasergravieren). Das erhöhte spezifische Volumen der martensitischen Randschicht erzeugt des Weiteren Druckeigenspannungen in der Randzone, welche einer Rissinitiierung und dem Risswachstum entgegenwirken.

Die Erhöhung des Reibwerts kann aber auch ermöglichen, dass der Presssitz bzw. der Kraftschluss selbst verringert wird, da der hohe Reibwert für einen gleichermaßen guten Formschluss zwischen den Bauteilen sorgt. Ein geringerer Presssitz bzw. ein geringerer Beitrag des Kraftschlusses führt wiederum zu geringeren Zugspannungen im Lagerbauteil (z.B. Innenring auf eine Welle aufgeschrumpft), was wiederum in einer längeren Bauteillebensdauer resultiert.

Des Weiteren kann ein erhöhter Reibungskoeffizient zwischen Lagerbauteil und Umgebung (z.B. Gehäuse/Welle) aufgrund der Texturierung der Oberfläche zur Vermeidung von Bewegungen (z.B. Ringkriechen) beitragen, wodurch die Lebensdauer des Lagerbauteils verlängert werden kann.

Das Laserhärten der funktionellen und/oder der nichtfunktionelle Fläche kann mit einem oder mehreren Laserköpfen durchgeführt werden.

Gemäß einem weiteren vorteilhaften Ausführungsbeispiel weist die Fläche mindestens einen zweiten Oberflächenbereich auf, wobei der zweite Oberflächenbereich bis in eine zweite Härtetiefe lasergehärtet ist, wobei die zweite Härtetiefe geringer ist als ist erste Härtetiefe.

Alternativ oder zusätzlich kann die Fläche auch mindestens einen dritten Oberflächenbereich aufweisen, wobei der dritte Oberflächenbereich nicht lasergehärtet ist.

Wie oben erwähnt, findet beim Laserhärten ein mikrostruktureller Phasenwechsel statt, der zu einer Änderung des spezifischen Volumens bzw. zu einer Änderung der Dichte der physikalischen Phasen führt, z.B. bei der Umwandlung in Martensit und/oder Bainit. Die gehärteten und umgewandelten Bereiche besitzen ein größeres Volumen als in der Ausgangsphase und führen zu einer Erhebung der lasergehärteten Oberflächen im Mikrometerbereich.

Dabei erheben sich "tiefer" gehärtete Oberflächenbereiche höher als weniger "tief" gehärtete oder gar nicht gehärtete Oberflächenbereiche. Mit anderen Worten erhebt sich der erste Oberflächenbereich höher als der zweite Oberflächenbereich bzw. der dritte Oberflächenbereich. Gelichermaßen erhebt sich aber auch der zweite Oberflächenbereich höher als der dritte Oberflächenbereich.

Dadurch lässt sich eine bestimmte Oberflächentextur und Topologie aufbringen. Alternativ kann durch eine hinreichend große Erwärmung und die Erzeugung lokaler Schmelzpoole auch Material abgetragen/ verdampft werden und dadurch eine Textur erzeugt werden (Lasergravieren).

Selbstverständlich können auch weitere Oberflächenbereich mit weiteren unterschiedlichen Härtetiefe vorgesehen sein, um beispielsweise die Oberflächentextur weiter zu verfeinern.

So kann, wie eine weiteres bevorzugtes Ausführungsbeispiel zeigt, der erste und der zweite und/oder dritte Oberflächenbereich derart angeordnet sein, dass der zweite und/oder dritte Oberflächenbereich ein Schmiermittelreservoir und/oder eine Schmiermittelrille ausbildet, die durch den ersten Oberflächenbereich abgegrenzt ist. Dies trägt vorteilhafterweise zu einer Verschleißminderung bei Gleitkontakten bei. Darüber hinaus kann dadurch sichergestellt werden, dass Schmiermittel an bestimmten Stellen am Gleitlagerbauteil, insbesondere an bestimmten Stellen an den Gleitflächen, gehalten und/oder an bestimmte Stellen im Gleitlagerbauteil, insbesondere an bestimmten Stellen an den Gleitflächen, geführt werden kann.

So kann beispielsweise eine "Golfball-Topographie" erzeugt werden, um Schmierrillen zu schaffen und dadurch die Schmierbedingungen zu verbessern. Dies kann wie oben erwähnt, entweder durch selektives Härten lokaler Bereiche oder durch eine unterschiedliche Härtetiefe, oder aber durch lokale Anschmelzungen erreicht werden. Die entstandenen Vertiefungen wirken als Schmierstoffreservoir.

Dieses Verhalten bzw. diese Eigenschaft kann auch genutzt werden, um Texturen für erhöhte Reibung auf nichtfunktionellen Kontaktflächen zu erzeugen, um beispielsweise eine Relativbewegung zwischen Ringen und Kontaktpartnern (Gehäuse/Welle) zu vermeiden. Durch einen Formschluss bzw. einen Reibschluss mit sehr hohem Reibwert, der die Relativbewegung von Lager und Gegenstück in der Anwendung behindert, kann ein geringerer Presssitz / ein geringerer Beitrag des Kraftschlusses erreicht werden, was wiederum zu geringeren Zugspannungen im Lagerbauteil (z.B. Innenring auf Welle aufgeschrumpft) und einer längeren Bauteillebensdauer führt.

Deshalb ist auch ein Ausführungsbeispiel vorteilhaft, bei dem die mindestens eine Fläche eine nichtfunktionelle Fläche ist und der auf eine erste Härtetiefe lasergehärtete erste Oberflächenbereich einen ersten Reibwert hat und der auf eine zweite geringeren Härtetiefe gehärtete zweite Oberflächenbereich und/oder der nicht-lasergehärtete dritte Oberflächenbereich einen zweiten bzw. dritten Reibwert haben, wobei der erste Reibwert höher ist als der zweite und/oder dritte Reibwert.

Durch die gezielte Erhöhung des Reibungskoeffizienten des Lagerbauteils an bestimmten Stellen, kann die Relativbewegung zwischen Lagerbauteil und einem Gegenstück (z.B. einer Welle/Gehäuse) in der Anwendung erschwert sein. Die Erhöhung des Reibwerts und auch die spezielle Ausgestaltung der Oberflächentextur kann einen geringeren Presssitz bzw. einen geringeren Beitrag des Kraftschlusses ermöglichen, was wiederum zu geringeren Zugspannungen im Lagerbauteil und einer längeren Bauteillebensdauer führt.

Gemäß einem weiteren vorteilhaften Ausführungsbeispiel ist der erste Oberflächenbereich kontinuierlich ausgebildet.

Dadurch kann erreicht werden, dass das Gleitlager auf der gesamten Umfangsfläche ohne weiche Stelle ausgeführt ist, was beispielsweise für eine gleichmäßige Reibwerterhöhung und damit eine gleichmäßige Kraftübertragung sorgt. Dies kann mit einem oder mehreren Laserköpfen erreicht werden.

Alternativ kann es natürlich auch vorteilhaft sein, wenn der erste Oberflächenbereich als diskrete Oberflächenbereichsabschnitte ausgebildet ist.

So kann beispielsweise auf der vollen Umfangsfläche zwischen Start- und Endposition eines Scanvorgangs ein weicher, nicht lasergehärteter, Bereich vorgesehen sein, oder sogar mehrere weiche Bereiche ermöglicht werden, die bestimmte Muster ausbildet. So kann beispielweise die Härtung als mehrere Rechtecke/ Quadrate, mehrere kreisförmige/ ovale Punkte, mehrere Dreiecke, oder auch als Zickzackformen, optional mit verschiedenen Winkeln, ausgebildet sein.

Dabei können die Muster weitere Funktionen beinhalten, wie beispielsweise die oben genannten Schmiermittelreservoirs oder -rillen. Sie können aber auch lediglich als spezifische Designs ausgestaltet sein, die beispielsweise schon optisch das Lager der Anmelderin als Herstellerin zuordnen.

Gemäß einem weiteren bevorzugten Ausführungsbeispiel weist der lasergehärteten Oberflächenbereich mindestens eine Weichstelle oder Weichnaht aufweist, wobei die Weichstelle/Weichnaht in einem nicht belasteten Bereich des lasergehärteten Oberflächenbereichs angeordnet ist und/oder wobei die Weichstelle/Weichnaht winklig zu einer Belastungsrichtung angeordnet ist.

Es kann eine Weichstellt/Weichnaht oder mehrere Weichstellen/Weichnähte geben.

Eine derartige Weichstelle/Weichnaht kann beispielsweise auch dadurch entstehen, dass ein bereits gehärteter Bereich nochmals erwärmt wird. Dies kann beispielsweise dadurch geschehen, dass der Laser, der die zu härtende Fläche abtastet, bereits erwärmte und wieder abgekühlte Bereiche der zu härtenden Fläche nochmals überstreicht. Derartige Weichstellen sind insbesondere bei Gleitlagern nicht unbedingt kritisch, da die gesamte Fläche als Gleitfläche dient und lokale kleinräumige Weichstellen nicht kritisch sind, wenn die Gleitfläche ansonsten gehärtet ist.

Dadurch kann das Härteverfahren deutlich vereinfacht werden, da auf komplexe Anlagentechnik oder Prozessführung, insbesondere auch zum Vorwärmen, oder ähnliches, die für ein schlupfloses Härten, also ein Härten ohne Weichstelle bzw. Weichnaht, nötig wären, verzichtet werden kann.

Prinzipiell kann der zu härtende Oberflächenbereich mittels Laserhärten mit einer Weichnaht oder ohne eine Weichnaht gehärtet werden.

Wenn möglich, ist das technisch einfachere Verfahren, das Härteverfahren mit Weichnaht für die Laufbahn-/Gleitflächenhärtung, zu bevorzugen. Insbesondere wenn ein dauerhafter Kontakt der Gleitkörper vermieden werden kann (z. B. bei hydrodynamischen oder hydrostatischen Gleitlagern), kann eine Weichnaht akzeptiert werden.

Alle nichtfunktionellen Oberflächen können mit einer weichen Naht gehärtet werden.

Die Weichstelle bzw. Weichnaht ist vorzugsweise in axialer Richtung bzw. senkrecht zur Überroll-/Belastungsrichtung ausgerichtet.

Um eine bessere Last- und Spannungsverteilung zu erreichen, kann, wie ein weiteres bevorzugtes Ausführungsbeispiel zeigt, die Weichnaht in einem anderen Winkel als parallel zur axialen Richtung des Rings ausgeführt werden.

Für den Fall, dass das Gleitlager eine oszillierende Bewegung von weniger als 360°, typischerweise +/- 5° - 40°, ausführt, kann die Weichnaht auch in der unbelasteten Zone positioniert werden.

Gemäß einem weiteren bevorzugten Ausführungsbeispiel weist das Gleitlager einen an zumindest einer Trennungsfläche geteilten Lagerring auf, wobei vorzugsweise neben der Trennungsfläche zumindest eine Weichstelle vorgesehen ist. Das Laserstrahlhärtegerät kann zudem eingesetzt werden, um an der Trennstelle eine lokale Nut zur Rissinitiierung für die spätere, gezielte Trennung zu erzeugen (Lasernotching).

Ist einer der Gleitlagerringe montagebedingt gespalten ist das Laserhärten besonders vorteilhaft, da das Volumen, in das durch das Laserhärten Eigenspannungen eingebracht werden, deutlich geringer ist als beim konventionellen Härten, was beim Trennen der Lagerringe zu weniger Deformation führt. Die Deformation beim Trennen entsteht durch das Auflösen der Eigenspannungen, die beim Erwärmen/Härten in den Lagerring eingebracht werden. Insbesondere beim induktiven Härten können die Eigenspannungen so groß sein, dass nach dem Trennen eine aufwendige Nachbearbeitung nötig ist, oder im schlimmsten Fall der Lagerring insgesamt unbrauchbar ist.

Weiterhin ist vorteilhaft, wenn der zu trennende Lagerring neben der Trennungsfläche eine Weichnaht aufweist. Diese kann neben der Teilung, die außerhalb der belasteten Zone liegt, angeordnet werden. Dadurch kann der Deformation beim Auslösen der Eigenspannungen durch das Trennen besonders gut entgegengewirkt werden, da im Bereich der Weichnaht keine bzw. nur vernachlässigbar große Eigenspannungen eingebracht sind.

Weiterhin ist ein Ausführungsbeispiel vorteilhaft, bei dem das Gleitlager einen ersten Gleitpartner mit einer ersten Gleitflächen und einen zweiten Gleitpartner mit einer zweiten Gleitfläche aufweist, die jeweils an ihren Gleitflächen miteinander in Gleitkontakt sind, wobei die erste Gleitfläche und die zweite Gleitfläche jeweils einen ersten Oberflächenbereich aufweist, der lasergehärtet ist, wobei eine Härte des ersten Oberflächenbereichs der ersten Gleitfläche und eine Härte des ersten Oberflächenbereichs der zweiten Gleitfläche eine im wesentlichen gleiche lasergehärtete Härte aufweisen.

Wenn beide Gleitpartner die gleiche Härte aufweisen, kann sichergestellt werden, dass nicht einer der beiden Partner übermäßig verschleißt, während der andere Partner keinen oder nur wenig Verschleiß erfährt.

Weiterhin ist vorteilhaft, wenn eine Komponente des Gleitlagers, die die Fläche mit dem lasergehärteten Oberflächenbereich aufweist, aus einem Vergütungsstahl gefertigt ist.

Typische Stahlsorten sind alle härtbaren Stahlsorten mit der folgenden Bandbreite der der chemischen Zusammensetzung:
Kohlenstoff (0,30 - 1,10 Gew.-%), und/oder
Silizium (0,10 - 1,0 Gew.-%), und/oder
Mangan (0,10 - 1,50 Gew.-%), und/oder
Chrom (0,10 - 2,00 Gew.-%) und/oder
Molybdän (0,01 - 0,75 Gew.-%).

Besonders bevorzugt sind Stähle der Vergütungsstahlsorte mit einem Kohlenstoffgehalt zwischen 0,3 und 1,1 Gew. %. Dazu gehört insbesondere ein Stahl der Spezifikation 42CrMo4.

Alternativ ist auch die Verwendung eines Stahls der Spezifikation 50CrMo4 vorteilhaft.

Derartige Vergütungsstähle lassen sich besonders gut härten.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

### Kurze Figurenbeschreibung

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
Fig. 1: Eine schematische Schnittansicht durch ein erstes Ausführungsbeispiel eines Gleitlagers;
Fig. 2: Eine schematische Schnittansicht durch ein zweites Ausführungsbeispiel eines Gleitlagers;
Fig. 3: Eine schematische Schnittansicht durch ein drittes Ausführungsbeispiel eines Gleitlagers;
Fig. 4: Eine schematische perspektivische Ansicht eines vierten Ausführungsbeispiels eines Gleitlagerrings;
Fig. 5: Eine schematische perspektivische Ansicht eines fünften Ausführungsbeispiels eines Gleitlagerrings;
Fig. 6: Eine schematische perspektivische Ansicht eines sechsten Ausführungsbeispiels eines Gleitlagerrings;
Fig. 7: Eine schematische perspektivische Ansicht eines siebten Ausführungsbeispiels eines Gleitlagerrings;
Fig. 8: Eine schematische perspektivische Ansicht eines achten Ausführungsbeispiels eines Gleitlagerrings;
Fig. 9: Eine schematische perspektivische Ansicht eines neunten Ausführungsbeispiels eines Gleitlagerrings;
Fig. 10: Eine schematische perspektivische Ansicht eines zehnten Ausführungsbeispiels eines Gleitlagerrings;
Fig. 11: Eine schematische perspektivische Ansicht eines elften Ausführungsbeispiels eines Gleitlagerrings;
Fig. 12: Eine schematische Darstellung einer Oberflächentextur;
Fig. 13: Eine schematische perspektivische Ansicht eines zwölften Ausführungsbeispiels eines Gleitlagerrings; und
Fig. 14: Eine schematische perspektivische Ansicht eines dreizehnten Ausführungsbeispiels eines Gleitlagerrings.

### Detaillierte Beschreibung der Erfindung

Im Folgenden werden gleiche oder funktionell gleichwirkende Elemente mit denselben Bezugszeichen gekennzeichnet.

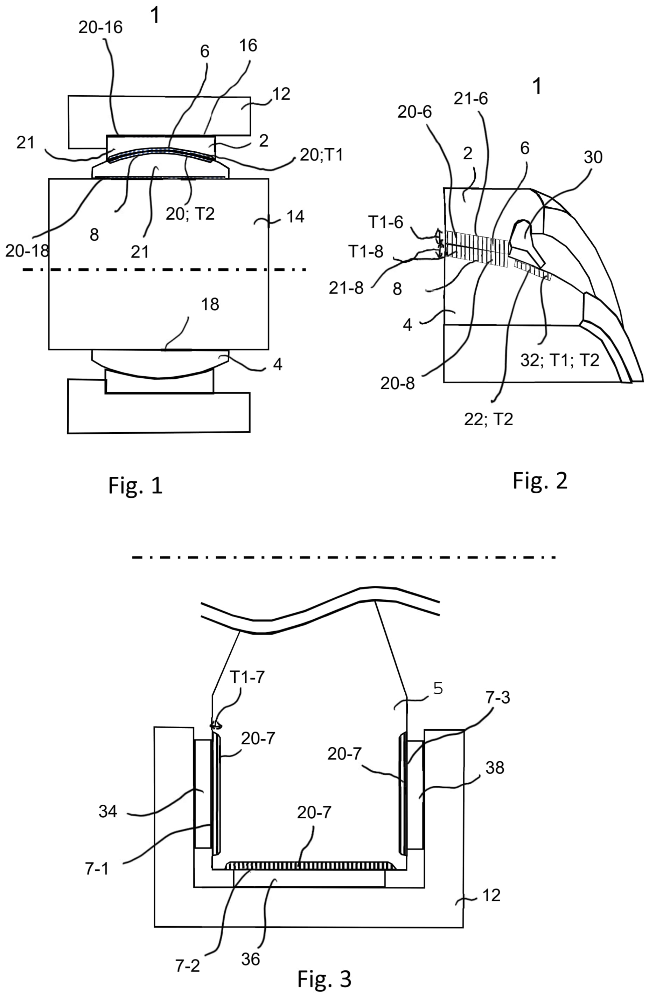

Figur 1 zeigt schematisch eine Schnittansicht durch einen Gleitlager 1 mit einem Außenring 2 und einem Innenring 4, die miteinander an Gleitflächen 6 bzw. 8 in Gleitkontakt stehen. Weiterhin zeigt Fig. 1, dass der Außenring 2 in einem Gehäuse 12 aufgenommen ist, während der Innenring 4 von einer Welle 14 getragen wird. Somit ist der Außenring 2 an seiner Außenfläche 16 in Reibkontakt mit dem Gehäuse 12 und der Innenring 4 ist an seiner Innenfläche 18 in Reibkontakt mit der Welle 14. Entsprechend der Definition der vorliegenden Erfindung sind somit die Gleitflächen 6, 8 als funktionelle Flächen und die Kontaktflächen 16, 18 als nichtfunktionelle Flächen zu betrachten.

Weiterhin zeigt Fig. 1 und detaillierter Fig.2, dass die Gleitflächen 6, 8 einen ersten Oberflächenbereich 20-6; 20-8 aufweisen, in dem die Gleitflächen 6, 8 bis in eine erste Härtetiefe T1-6, T1-8 lasergehärtet sind.

Beim Laserhärten werden die Stahlbauteile lokal so wärmebehandelt, dass durch schnelle Lasererwärmung und anschließende Abkühlung durch Wärmeleitung ein martensitisches Gefüge erzeugt wird. Dieses martensitische Gefüge erstreckt sich in dem ersten Oberflächenbereich 20 bis in die ersten Härtetiefe T1. Unterhalb des Oberflächenbereichs 20 schließt sich ein Grundgefüge 21 an, also das Ausgangsgefüge des Stahls, das von der Wärmebehandlung mittels des Lasers nicht oder nur geringfügig betroffen ist.

Das mittels des Lasers erzeugte martensitische Gefüge wiederum sorgt dafür, dass der Lagerring in dem ersten Oberflächenbereich 20 an den Gleitflächen 6, 8 deutlich verschleißresistenter ist und hohe Belastungen aushalten kann.

Vorzugsweise ist die Härtetiefe T1-6 und die Härtetiefe T1-8 im Wesentlichen gleich ausgebildet.

Optional können, wie in Fig. 1 skizziert, auch nichtfunktionellen Flächen, also z.B. die Kontaktflächen 16, 18, mit denen der Außenring 2 im Gehäuse 12 aufgenommen ist bzw. der Innenring 4 in Kontakt mit der Welle 14 ist, in einem Oberflächenbereich 20-16, 20-18 bis in eine Härtetiefe T1 lasergehärtet sind (siehe Fig.1).

Da beim Laserhärten ein mikrostruktureller Phasenwechsel stattfindet, der zu einer Änderung des spezifischen Volumens bzw. zu einer Änderung der Dichte der physikalischen Phasen führt, z.B. bei der Umwandlung in Martensit und/oder Bainit, besitzen die gehärteten und umgewandelten Oberflächenbereiche ein größeres Volumen als in der Ausgangsphase und führen zu einer Erhebung der lasergehärteten Oberflächen im Mikrometerbereich. Dadurch wiederum kann erreicht werden, dass insbesondere an Kontaktflächen 16, 18 zu umgebenden Bauteilen, wie beispielsweise der Welle 14 oder dem Gehäuse12 der Presssitz und/oder die Reibung vergrößert wird, so dass die Bauteile weniger Kriechbewegungen ausgesetzt sind. Alternativ kann durch ein lokales Anschmelzen die Oberflächentopographie derart verändert werden, dass durch die entstehenden Krater und Aufwerfungen der Reibwert erhöht wird.

Weiterhin ermöglicht die Reibfelderhöhungscharakteristik des Laserhärtens, dass dadurch eine geringere Überdeckung zwischen einem Lagerring (e.g. Außenring 2, Innenring 4) und dem den Lagerring aufnehmenden Bauteil (e.g. Welle 14, Gehäuse 12) gewählt werden kann, und dennoch eine vergleichbar, wenn nicht bessere drehfeste Verbindung zwischen Lagerbauteil und umgebenden Bauteil erreicht werden kann. Dies wiederum reduziert die Zugspannungen in dem Lager selbst und führt zu einer längeren Lebensdauer. Die entstehenden Druckeigenspannungen in der gehärteten Randschicht führen zudem zu einer längeren Lebensdauer.

Fig. 2 zeigt in Detailansicht ein weiteres Beispiel, bei dem das Gleitlager 1 zusätzlich eine Dichtung 30 aufweist, die an dem Außenring 2 befestigt ist und an dem Innenring 4 in einem Bereich, der nicht in Gleitkontakt mit dem Außenring 2 ist, und als Anlauffläche 32 für die Dichtung 30 dient, anläuft. Die Anlauffläche 32 kann entweder den funktionellen Flächen also der Gleitfläche 8 zugerechnet werden oder aber auch den nichtfunktionellen Flächen, da hier kein Gleitkontakt mit dem Außenring 2 erfolgt. Egal welche Zuordnung getroffen wird, kann auch die Anlauffläche 32 der Dichtung 30 einem erhöhten Verschleiß ausgesetzt sein. Es ist deshalb vorteilhaft auch die Anlauffläche 32 laserzuhärten.

Die Anlauffläche 32 kann auf die gleich Härtetiefe T1, wie die Gleitfläche 8 gehärtet sein.

Optional kann, die Anlauffläche 32 auf eine zweite Härtetiefe T2 gehärtet sein.

Optional zeigt dann die Gleitfläche 4 einen ersten Oberflächenbereich 20 mit einer ersten Härtetiefe T1 und einen zweiten Oberflächenbereich 22 mit einer zweiten Härtetiefe T2.

Fig. 3 zeigt schematisch ein weiteres Beispiel eines Gleitlagers 1 mit einem Gleitlagerring 5, der in einem Gehäuse 12 aufgenommen ist und dreiseitig an Gleitschuhen 34, 36, 38, die von dem Gehäuse 12 getragen werden, entlanggleitet. Dazu hat der Gleitring 5 drei Gleitflächen 7-1, 7-2, 7-3, die wiederum in dem ersten Oberflächenbereich 20 des Gleitkontakts auf eine erste Härtetiefe T1-7 gehärtet sind.

Wie oben erwähnt entsteht durch das Laserhärten entsteht eine Phasenumwandlung, die in einer Volumenänderung des gehärteten Materials resultiert, so dass die gehärteten Stellen sich leicht aus der Oberfläche herausheben. Diese Tatsache kann auch dazu verwendet werden, die Oberfläche mit einer speziellen Textur zu versehen, die beispielsweise dafür sorgt, dass Schmierstoff an speziellen Stellen gehalten oder zu speziellen Orten geführt wird.

Dabei kann es insbesondere bei den Gleitflächen 6, 8, besonders bevorzugt sein, eine Schmiermittelreservoirstruktur oder Schmiermittelrillenstruktur aufzubringen, die dafür sorgt, dass Schmiermittel an den Gleitflächen 6, 8 verbleibt und nicht abtransportiert wird. Dadurch können auch verbesserte Notlaufeigenschaften bzw. Schmierbedingungen bei kleinen Drehzahlen erreicht werden.

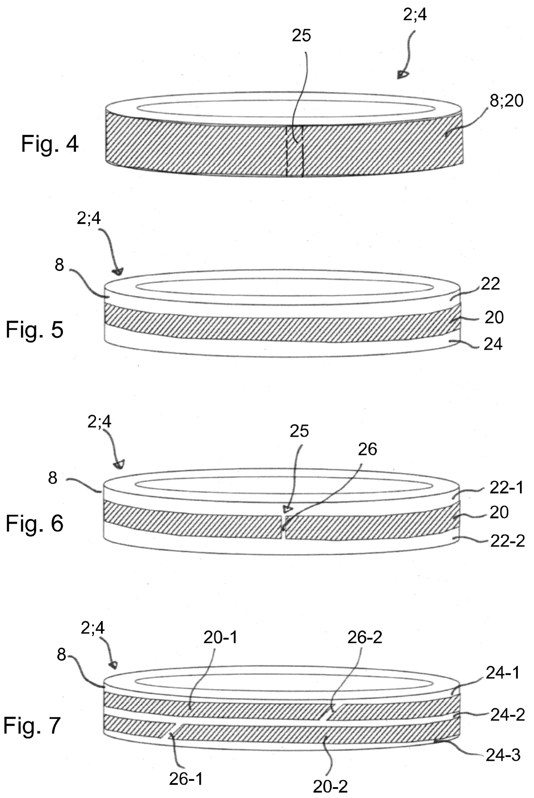

Die Figuren 4 - 11 zeigen schematisch am Beispiel eines Innenrings 4 verschiedene lasergehärtete Gleitflächen 8.

So zeigt beispielsweise Figur 4, dass sich der erste lasergehärtete Oberflächenbereich 20 über die gesamte Gleitfläche 8 erstreckt.

Die Oberfläche 20 kann schlupflos, also ohne erkennbaren Unterschied in der Härtung der Oberfläche 20 über den gesamten Umfang, oder mit Schlupf, also mit mindestens einer Nahtstelle 25, lasergehärtet sein.

Ebenso ist denkbar, die Härtespur spiralförmig über den Umfang verteilt auszubilden, wobei zwischen den Spuren Weichzonen verbleiben.

Alternativ können die Härtespuren auch direkt angrenzend ausgebildet sein, so dass die gesamte Fläche gehärtet wird.

Wird nicht schlupflos gehärtet kann im Bereich der optionalen Nahtstelle 25 auch eine Weichnaht vorhanden sein. Eine derartige Weichstelle/Weichnaht kann beispielsweise dadurch entstehen, dass ein bereits gehärteter Bereich nochmals erwärmt wird. Dies kann beispielsweise dadurch geschehen, dass der Laser, der die zu härtende Fläche abtastet, bereits erwärmte und wieder abgekühlte Bereiche der zu härtenden Fläche nochmals überstreicht oder Wärme in diese einbringt, beispielsweise durch Wärmeleitung im Falle eines sehr geringen Abstandes des Lasers zur der bereits gehärteten Oberfläche. Derartige Weichstellen sind insbesondere bei Gleitlagern nicht unbedingt kritisch, da die gesamte Fläche als Gleitfläche dient und lokale kleinräumige Weichstellen nicht kritisch sind, wenn die Gleitfläche ansonsten gehärtet ist.

Figur 5 dagegen zeigt, dass, wie auch schon mit Bezug auf Fig. 2 beschrieben, nicht die gesamte Gleitfläche 8 gleichmäßig lasergehärtet ist. In dem dargestellten Ausführungsbeispiel, sind ein erster Oberflächenbereich 20, der auf eine erste Härtetiefe T1 lasergehärtet ist, ein zweiter Oberflächenbereich 22, der auf eine zweite Härtetief T2 lasergehärtet ist, und ein dritter Oberflächenbereich 24, der in dem dargestellten Fall gar nicht lasergehärtet ist, vorgesehen. Weiterhin zeigt Figur 5, dass sich die lasergehärteten Oberflächenbereich 20; 22 kontinuierlich um den gesamten Lagerring 2 herum erstreckt.

Bei dem Ausführungsbeispiel der Figur 6 dagegen erstreckt sich der lasergehärtete Oberflächenbereich 20 nicht um den gesamten Umfang, so dass in einem Endbereich/Nahtbereich 24 ein Spalt 26 verbleibt. Ein derartiger Spalt 26 kann beispielsweise beim Abscannen des Lagerrings mit Hilfe eines Laserkopfes entstehen. Da es sich jedoch bei der lasergehärteten Fläche 20 um eine Gleitfläche 8 handelt, ist ein kleiner ungehärteter Bereich 26 auch in Hinblick auf die Verschleißeigenschaften des Lagerrings unkritisch.

Figur 7 zeigt zwei lasergehärtete Oberflächenbereiche 20-1, 20-2, die seitlich und mittig jeweils Oberflächenbereiche 22-1, 22-2, 22-3 mit einer niedrigeren Härtetiefe T2 und/oder nicht lasergehärtete Bereiche 24-1, 24-2, 24-3 aufweisen. Diese Bereiche 22, 24 können beispielsweise als Schmiermittelrillen fungieren, um Schmiermittel gezielt auf der Gleitfläche zu halten bzw. auf die Gleitfläche zu führen.

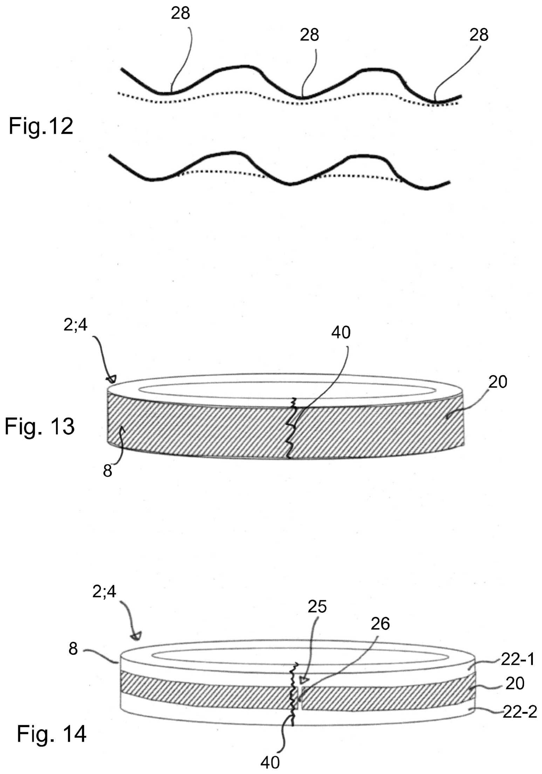

Vergrößert sind derartige Schmiermittelrillen oder Schmiermitteleinkerbungen 28 in Fig. 12 dargestellt. Diese entstehen, wie oben erwähnt durch eine gezielte lokale Anpassung der Laserhärtung, wobei in den Schmiermitteleinkerbungsbereich (Oberflächenbereich 22; 24) nicht lasergehärtet wird (Oberflächenbereich 24) oder nur mit einer geringeren Intensität (Oberflächenbereich 22) gehärtet wird.

Dadurch kann auf dem Lagerring auch eine Golfballtopologie aufgebracht werden, die für eine besonders gute Aufnahme von Schmiermittel sorgt.

Selbstverständlich ist ebenfalls möglich, dass beispielsweise der auf die zweite Härtetiefe T2 gehärtete Oberflächenbereich 22-2 zwischen den auf die erste Härtetiefe gehärteten Oberflächenbereichen 20 mittig angeordnet ist, aber an den Randbereichen des Lagerrings 2 jedoch ungehärtete Oberflächenbereiche 24-1, 24-3 verbleiben.

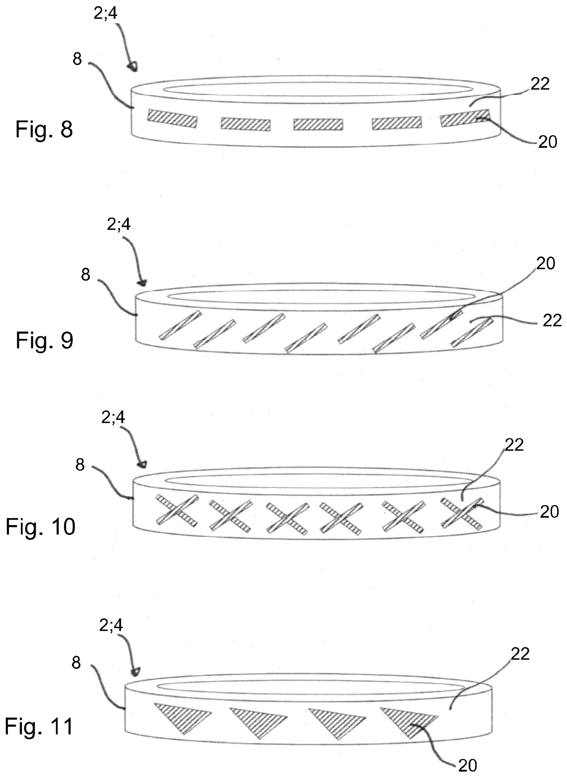

Neben den sich mehr kontinuierlich erstreckenden Ausführungsbeispielen der Figuren 4 -7, kann es ebenfalls möglich sein, lediglich diskrete Stellen laserzuhärten, wie in den Ausführungsbeispielen der Figuren 8 - 11 dargestellt ist. Selbstverständlich sind andere Muster denkbar, so dass beispielsweise auch spezifische Muster für die Zuordnung des Lagerrings zu einem bestimmten Hersteller möglich sind.

Wie oben ebenfalls bereits erwähnt kann der Lagerring 2; 4 mit oder ohne Schlupf gehärtet werden.

Weiterhin können ein oder mehrere Laserköpfe eingesetzt werden.

Fig. 13 und 14 zeigen weitere Ausführungsbeispiele, bei denen der Lagerring 2; 4 montagebedingt an einer Trennfläche 40 geteilt ist. Insbesondere bei großen Gleitlagern ist eine Teilung eines der Lagerring nötig, um die beiden Lagerringe in Gleitkontakt aneinander montieren zu können.

Bei derartigen Lagerringen 2; 4, die montagebeding geteilt werden müssen, ist es besonders vorteilhaft das Laserhärten einzusetzen, da das Volumen in das durch das Härten Eigenspannungen eingebracht werden, beim Laserhärten deutlich geringer ist als beim konventionellen Härten, was beim Trennen der Lagerringe zu weniger Deformation führt. Die Deformation beim Trennen entsteht durch das Auslösen der Eigenspannungen, die beim Erwärmen/Härten in den Lagerring eingebracht werden.

Figur 13 zeigt einen Lagerring 2; 4 bei dem die zu härtende Oberfläche umfänglich vollständig lasergehärtet ist, und die Trennfläche 40 umfänglich beliebig an dem Lagerring 2; 4 angeordnet sein kann. Beim Einbau des Lagers kann die Trennfläche 40 dann beispielsweise so angeordnet werden, dass die Trennfläche 30 an einer unbelasteten oder gering belasteten Stelle des Gleitlagers angeordnet ist.

Figur 14 zeigt einen Lagerring, bei dem neben der Trennungsfläche 40 zumindest ein ungehärteter Bereich 26 oder ein nach dem Härten wieder angelassener Bereich, also eine sognannte Weichnaht 25 angeordnet ist. Dadurch kann der Deformation beim Auflösen der Eigenspannungen durch das Trennen besonders gut entgegengewirkt werden, da im Bereich der Weichnaht keine bzw. nur vernachlässigbar große Eigenspannungen eingebracht sind. Zudem lässt sich durch das Vorsehen einer oder mehrerer Weichzonen neben der gehärteten "Sollbruchstelle" ein gezieltere Rissinitiierung im gehärteten, spröderen Gefüge (lasergehärtet) einstellen.

Insgesamt kann durch das Laserhärten ein Gleitlager bereitgestellt werden, das eine höhere Resistenz gegen Verschleiß aufweist. Gleichzeitig kann durch das Laserhärten eine Oberflächentextur aufgebracht werden, die ermöglicht, dass Schmiermittel auf der Gleitfläche gehalten wird, wodurch die Schmiereigenschaften des Gleitlagers verbessert werden.

Weiterhin kann bei Laserhärten auch der nichtfunktionellen Flächen eine Relativbewegung zwischen dem Lagerbauteil und einem des Lagerbauteil aufnehmenden Bauteil verringert werden.

Das Laserhärten selbst kann mit einem oder mehreren Laserköpfen erfolgen und kann vorzugsweise in bestehende Bearbeitungsprozesse integriert werden, so dass keine zusätzlichen kostenintensiven Bearbeitungsschritte erforderlich sind.

### Bezugszeichenliste

- 1: Gleitlager
- 2, 4: Lagerring (Außenring, Innenring)
- 5: Gleitlagerring
- 6, 8, 7: Gleitflächen
- 12: Gehäuse
- 14: Welle
- 16, 18: Kontaktflächen
- 20, 22; 24: Oberflächenbereich
- 21: Grundgefüge
- 25: Endbereich/Nahtbereich
- 26: Spalt
- 25: Nahtstelle
- 28: Schmiermitteleinkerbungen
- 30: Dichtung
- 32: Anlauffläche
- 34, 36, 38: Gleitschuhe
- 40: Trennfläche
- T1, T2: Härtetiefe

## Patentansprüche

1. Gleitlager (1), insbesondere Großgleitlager für eine Wind- oder Wasserkraftanlage, **dadurch gekennzeichnet, dass** das Gleitlager (1) mindestens eine Fläche aufweist, die einen ersten Oberflächenbereich (20) aufweist, der bis zu einer ersten Härtetiefe (T1) lasergehärtet ist.

2. Gleitlager (1) nach Anspruch 1, wobei mindestens eine der mindestens einen Fläche eine Gleitfläche (6, 8, 7) ist, die in Gleitkontakt mit einem Gleitpartner des Gleitlagers (1) ist.

3. Gleitlager (1) nach Anspruch 1 oder 2, wobei mindestens eine der mindestens einen Fläche (16; 18) eine nichtfunktionelle Fläche ist, wobei die nichtfunktionelle Fläche (16; 18) im zusammengebauten Zustand einem Kontakt mit einem an dem Gleitlager (1) anliegenden Element (12; 14) ausgesetzt ist oder in Kontakt mit einem das Gleitlager (1) aufnehmenden Element ist.

4. Gleitlager (1) nach einem der vorhergehenden Ansprüche, wobei die Fläche mindestens einen zweiten Oberflächenbereich (21) aufweist, wobei der zweite Oberflächenbereich (21) bis in eine zweite Härtetiefe (T2) lasergehärtet ist, wobei die zweite Härtetiefe (T2) geringer ist als ist erste Härtetiefe (T1).

5. Gleitlager (1) nach einem der vorhergehenden Ansprüche, wobei die Fläche mindestens einen dritten Oberflächenbereich (24) aufweist, wobei der dritte Oberflächenbereich (24) nicht lasergehärtet ist.

6. Gleitlager (1) nach Anspruch 4 oder 5, wobei der erste und der zweite und/oder dritten Oberflächenbereich (22, 24) derart angeordnet sind, dass der zweite und/oder dritte Oberflächenbereich (22, 24) ein Schmiermittelreservoir und/oder eine Schmiermittelrille (26) ausbildet, die durch den ersten Oberflächenbereich (20) abgegrenzt ist.

7. Gleitlager (1) nach Anspruch 3 und einem der Ansprüche 4 bis 5, wobei die mindestens eine Fläche eine nichtfunktionelle Fläche ist und der auf eine erste Härtetiefe (T1) lasergehärtete erste Oberflächenbereich (20) einen ersten Reibwert hat und der auf eine zweiten Härtetiefe (T2) lasergehärtete zweite Oberflächenbereich (22) einen zweiten Reibwert hat und/oder der nicht-lasergehärtete dritte Oberflächenbereich (24) einen dritten Reibwert hat, wobei der erste Reibwert höher ist als der zweite und/oder dritte Reibwert.

8. Gleitlager (1) nach einem der vorgehenden Ansprüche, wobei der erste Oberflächenbereich (20) kontinuierlich ausgebildet ist.

9. Gleitlager (1) nach einem der Ansprüche 1 bis 7, wobei der erste Oberflächenbereich (20) als diskrete Oberflächenbereichsabschnitte ausgebildet ist.

10. Gleitlager (1) nach einem der vorgehenden Ansprüche, wobei der lasergehärteten Oberflächenbereich (20, 22) mindestens eine Weichstelle (25) aufweist, wobei die Weichstelle in einem nicht belasteten Bereich des lasergehärteten Oberflächenbereichs angeordnet ist und/oder wobei die Weichstelle winklig zu einer Belastungsrichtung angeordnet ist.

11. Gleitlager (1) nach einem der vorhergehenden Ansprüche, wobei das Gleitlager (1) einen an zumindest einer Trennfläche (40) geteilten Lagerring aufweist, wobei vorzugsweise neben der Trennfläche (40) zumindest eine Weichstelle (25) vorgesehen ist.

12. Gleitlager (1) nach einem der vorhergehenden Ansprüche, wobei das Gleitlager (1) einen ersten Gleitpartner mit einer ersten Gleitflächen und einen zweiten Gleitpartner mit einer zweiten Gleitfläche aufweist, die jeweils an ihren Gleitflächen miteinander in Gleitkontakt sind, wobei die erste Gleitfläche und die zweite Gleitfläche jeweils einen ersten Oberflächenbereich (20) aufweist, der lasergehärtet ist, wobei eine Härte des ersten Oberflächenbereichs der ersten Gleitfläche und eine Härte des ersten Oberflächenbereichs der zweiten Gleitfläche eine im wesentlichen gleiche lasergehärtete Härte aufweisen.

13. Gleitlager (1) nach einem der vorhergehenden Ansprüche, wobei die erste Härtetiefe (T1) des ersten lasergehärte Oberflächenbereich (20) eine Tiefe von weniger als 2mm, insbesondere eine Tiefe von ungefähr 1mm, aufweist.

14. Gleitlager (1) nach einem der vorhergehenden Ansprüche, wobei eine Komponente des Gleitlagers (1), die die Fläche mit dem lasergehärteten Oberflächenbereich aufweist, aus einem Vergütungsstahlsorte mit einem Kohlenstoffgehalt zwischen 0,4 und 1,1 Gew. %, insbesondere aus einem 42CrMo4 Stahl oder einem 50CrMo4 Stahl gefertigt ist.
